# EUROPEAN PATENT APPLICATION

(11) **EP 3 653 280 A1**
(43) Date of publication of application: **20.05.2020**
(21) Application number: 19020455.2
(22) Date of filing: 02.08.2019
(51) Int. Cl.: B01D 53/00

(54) **CAPTURE AND UTILISATION OF CO2 FROM CEMENT PRODUCTION**

(30) Priority: 19.11.2018 US 201862769126 P
(71) Applicant: Linde Aktiengesellschaft, 80331 München (DE)
(72) Inventor: Krishnamurthy, Krish, Bridgewater, NJ 08807 (US); Stiller, Christoph, 82256 Fürstenfeldbruck (DE); Gärtner, Lars-Erik, Bridgewater, NJ 08807 (US); Rupieper, Andreas, 01328 Dresden (DE)
(74) Representative: Imhof, Dietmar

(57) **Abstract**

The present invention is directed to a method and a pathway to capture und use carbon dioxide, which is produced by cement plants.

## Description

The present invention is directed to a method and a pathway to capture and use carbon dioxide.

In the last decades the focus in the reduction of carbon dioxide (CO₂) was, to optimize all processes to avoid the production of carbon dioxide at all or at least to minimize the output of carbon dioxide. So several industrial sectors, where optimized to use renewable fuels, optimize combustion processes or even developed new synthesis routes for products or new catalysts to avoid CO₂ emissions.

But there are processes where it is not possible to avoid the production of carbon dioxide and therefore other solutions have to be developed. The emission of carbon dioxide contributes to the greenhouse effect and climate changes. To increase changes in the industry CO₂ emissions are penalized by taxes and bans.

One example, where the production of CO₂ can't be avoided is the production of cement. Therefore, the cement industry needs to think off different solutions to avoid the emission of CO₂ into the atmosphere. This situation also applies to other industries such as steel, refining and chemicals, among others.

Of course, it would be possible to store the captured CO₂ in large amount e.g. underground to avoid its emission into the atmosphere. But in most regions of the world carbon capture storage (CCS) is not accepted from the public or there are not enough or not stable enough caverns. Furthermore, it is still unclear what kind of negative effects this long-term storage would have for the environment.

An object of this invention is to couple different sectors to minimize or avoid the output of CO₂ into the atmosphere.

In the following the term sector is used to describe the different industry fields and energy sources and sinks in an industrial plant and its supply facilities. The cement production is for example one sector, whereas the electrolysis of Water, the synthesis of chemicals or the carbon capture facilities are other sectors.

There are already several technologies available for capturing CO₂ produced by the cement industry during the different manufacturing steps. Some of them are described in WO2015/154174. There are pre- or post-combustion processes available.

And there are as well steps available to reuse the CO₂ in different applications or store it. The potential for carbon capture utilization (CCU) is increasing from year to year. Up till now only small amounts of CO₂ are used in the different methods to reuse the CO₂.

Hence, the solution for this task is to combine different synthesis steps and sectors during the cement production to avoid CO₂ emissions. For example, it is aimed to capture CO2 from one sector and use it in one or more different sectors.

This objective is achieved by the method and the pathway according to independent claims. Preferred embodiments are given in the dependent claims, the description and the embodiments.

By coupling of different carbon capture technologies at a cement plant and use of the captured CO₂ the emission of CO₂ into the atmosphere can be avoided. Especially if the captured CO2 is used in other sectors that are accessible to the site where the CO₂ is captured.

A pathway was developed for coupling different synthesis steps and sectors for reducing CO₂ emissions into atmosphere from cement plants and other sectors that have large point sources of CO₂

As an example, according to the invention the captured CO₂ from any one sector including the cement industry can be used for concrete curing in ready-mix plants.

In another embodiment the captured CO₂ can be used for concrete curing in ready-mix plants and for conventional CO₂ uses. Conventional uses of CO₂ are for example to increase the amount of CO₂ in the atmosphere of greenhouse gases or in the food and beverage industry for e.g. carbonation of beverages or freezing of food.

CO₂ can also be used as feedstock for several chemical synthesis steps. Examples are the synthesis of gaseous and liquid fuels, chemical basis materials.

In a special embodiment of the invention the captured CO₂ is used together with hydrogen, which is preferably produced from water electrolysis using renewable power, as chemical basic material for synthesizing chemicals. By using such a method different sectors are coupled. This gives an economical and environmental benefit. One example is the production of methane, which can be used for heating, as fuel or for further synthesis of chemicals.

Another embodiment couples the production of CO by CO₂ electrolysis, for which the captured CO₂ is used as feedstock, with the use of CO in various industries. CO is used as raw material for the synthesis of plastics, methanol, dimethyl ether and other basic chemicals. In a preferred embodiment the CO, produced by CO₂ electrolysis, for which the captured CO₂ is used as feedstock, is additionally used together with hydrogen, which is preferably produced from water electrolysis using renewable power. Therefore, several sectors are coupled in such a way to produce benefits for the environment and the economy.

The captured CO₂ is preferably used close to its production site, so close to the cement production plant, but in other embodiments it is also possible to transport the captured CO₂ by pipelines or in transport vessels.

Preferably the other raw materials as hydrogen or the intermediate products like CO or methane are also produced close to the site, where they should be further used, but it is also possible to transport them by pipelines or in transport vessels.

There is only a small demand of CO₂ in each of the sectors, which are able to further use the captured CO₂, but by combining a number of different sectors the amount of used CO₂ becomes relevant and can a have positive effect on the global greenhouse effect and other negative consequences on the environment if the CO₂ would be emitted to the atmosphere instead. Further, by combining sectors, it is more advantageous to co-locate within short distances the site having the CO₂ emissions source and the site where the captured CO₂ is utilized. This enables minimizing transportation of the captured CO₂ in pipelines or other means such as liquid containers on trucks, and, hence reduce overall costs.

So especially for cement plants, where only a small amount of the captured CO₂ can be directly used for cement curing, the coupling with different sectors brings down the amount of emitted CO₂.

In a further preferred embodiment although the waste heat from the different coupled sectors is used e.g. for the heating of greenhouses. The heat is preferably used directly if the source and the sink are close together, but it can be also transferred by pipelines as steam or other heat transfer media.

## Claims

1. A method to reduce the CO₂ emission into atmosphere, **characterized by** coupling of different carbon capture technologies at a cement plant and use of the captured CO₂.

2. A pathway to couple different synthesis steps and sectors for reducing CO₂ emissions into atmosphere from cement plants.
